Europäisches Patentamt

European Patent Office

Office européen des brevets

(19)

(11) **EP 0 768 330 A1**

(12) **EUROPÄISCHE PATENTANMELDUNG**

(43) Veröffentlichungstag:
16.04.1997 Patentblatt 1997/16

(51) Int. Cl.⁶: **C08G 65/48**, B01D 71/52

(21) Anmeldenummer: 96114096.9

(22) Anmeldetag: 03.09.1996

(84) Benannte Vertragsstaaten:
DE FR GB

(30) Priorität: 12.10.1995 DE 19538025

(71) Anmelder: FRAUNHOFER-GESELLSCHAFT ZUR FÖRDERUNG DER ANGEWANDTEN FORSCHUNG E.V.
80636 München (DE)

(72) Erfinder:
• Bauer, Bernd
  66130 Fechingen (DE)

• Rafler, Gerald
  14473 Potsdam (DE)
• Ulrich, Hans-Heinz
  14513 Teltow (DE)

(74) Vertreter: Olgemöller, Luitgard, Dr. et al
Leonhard - Olgemöller - Fricke,
Patentanwälte,
Josephspitalstrasse 7
80331 München (DE)

(54) **Sulfonierte Polyaryletherketone**

(57) Die vorliegende Erfindung stellt ein Verfahren zum Herstellen von sulfonierten Polyaryletherketonen, auch in Form von Kationenaustauschermembranen, bereit, das dadurch gekennzeichnet ist, daß man aromatische Polyetherketone in einem Gemisch aus konzentrierter Schwefelsäure und Oleum mit einem Gesamtschwefeltrioxidgehalt von mindestens 82 Masse-% sulfoniert. Ferner betrifft die Erfindung sulfonierte Polyaryletherketone, auch in Form von Kationenaustauschermembranen, mit einem Verhältnis von Keto- zu Ethergruppen von > 1:1.

EP 0 768 330 A1

**Beschreibung**

Das technische Gebiet der Erfindung betrifft sulfonierte aromatische Polyetherketone, die sich insbesondere für Kationenaustauschermembranen eignen, sowie ein Herstellungsverfahren hierfür.

Polyaryletherketone sind thermisch und chemisch außergewöhnlich stabile Hochleistungswerkstoffe für spezielle Applikationen in der Elektrotechnik/Elektronik und im Maschinenbau. Die für polymere Hochleistungswerkstoffe typische aromatische chemische Struktur mit vorzugsweise p-Phenylenstrukturelementen im Makromolekül ist infolge ihrer gewünschten hohen thermischen und chemischen Stabilität zwangsweise mit einer äußerst geringen chemischen Reaktivität verbunden. Chemische Umsetzungen an diesen Polymeren gelingen deshalb nur für wenige ausgewählte Reaktionen und nur unter sehr drastischen Bedingungen. Die geringe chemische Reaktivität der aromatischen Polyetherketone ist sowohl eine Folge der 1,4-Phenylenstruktur als auch der geringen Accessibilität der potentiell noch substituierbaren Kohlenstoffatome des Makromoleküls. Die bekannten Polyetherketone unterscheiden sich hinsichtlich Konzentration, Verhältnis und Verteilung der die Phenylgruppen verknüpfenden Ether- und Ketogruppen (vgl. z.B. die chemischen Strukturen 1-3).

[-O-Phen-O-Phen-CO-Phen]      PEEK (1)
[-O-Phen-O-Phen-CO-Phen-CO-Phen]      PEEKK (2)
[-O-Phen-CO-Phen-O-Phen-CO-Phen-CO-Phen]      PEKEKK (3)

Verhältnis und Verteilung der kettenverknüpfenden Ether- und Ketogruppen bestimmen nicht nur bestimmte physikalische und Verarbeitungseigenschaften dieser Polymeren, sondern auch die Accessibilität der Polyetherketone für polymeranaloge Modifizierungsreaktionen. Ethergruppen im Makromolekül erhöhen die Zugänglichkeit der Phenylengruppen für Reaktanten, und sie erleichtern damit Substitutionsreaktionen an den aromatischen Kohlenstoffatomen des Polyetherketons.

In den Offenlegungsschriften DE 3321860 und DE 3402471 und in EP 0182506 werden sulfonierte Polyetherketone für Kationenaustauschermembranen beschrieben, die durch Sulfonierung eines Poly-(phenylen-etheretherketon)s PEEK (Struktur 1) mit konzentrierter Schwefelsäure erhalten wurden.

Nach dem in der EP 0574791 beschriebenen Sulfonierungsverfahren mit Chlorsulfonsäure bzw. Schwefelsäure mit bis zu 99,5% $H_2SO_4$ werden Sulfonierungsprodukte erhalten, die ausschließlich in den Etherarylethergruppen substituiert sind. Für die angestrebte hohe Austauscherkapazität, die eine hohe Konzentration an funktionellen Gruppen voraussetzt, bedeutet diese Reaktionsselektivität dann zwangsweise den Einsatz ethergruppenreicher Polyetherketone vom Typ PEEK oder PEEKK.

Die aus PEEK nach bekannten Verfahren hergestellten Membranen zeigen bei Ionenaustauscherkapazitäten bis ca. 1,2 mequ Sulfosäuregruppen pro g Polymeres bei ansonsten brauchbaren Membraneigenschaften ein applikationsrelevant gerade noch zu akzeptierendes Quellverhalten. Eine weitere Erhöhung der Austauscherkapazität durch eine höhere Konzentration der funktionellen Gruppen über den angegebenen Wert ist nicht möglich, da Membranen auf Basis eines weitgehend sulfonierten PEEK dann zu stark quellen. Das Wasseraufnahmevermögen Q der Membranen dieser ethergruppenreichen unvernetzten Polyetherketone liegt bei Sulfonierungsgraden deutlich über 1,2 mequ/g dann auch weit über 100% (Q = Naßgewicht- Trockengewicht)x100/Trockengewicht), was zu mechanisch wenig stabilen Membranen und damit zu geringer technologischer Belastbarkeit führt. Bei einem Sulfonsäuregruppengehalt von 1,5 mequ/g sind die Materialien bereits heißwasserlöslich.

Wegen dieser schlechten Werte wird die Quellung im Falle höher sulfonierter ethergruppenreicher Polyetherketone durch Vernetzung über einen Teil der funktionellen Sulfonsäuregruppen begrenzt. Die in die intermolekulare Vernetzung eingebundenen funktionellen Gruppen stehen für Ionenaustauschprozesse nicht mehr zur Verfügung, und damit führt diese Vernetzung zu einer Reduzierung der Austauscherkapazität. Die Vernetzungsreaktion ist darüberhinaus ein zusätzlicher technologischer Schritt nach der Formgebung mit den bekannten Schwierigkeiten von Reaktionen im polymeren Festkörper.

Ein verbessertes Quellverhalten zeigen sulfonierte Polyetherketone auf Basis von PEEKK. Allerdings läßt sich die Sulfonierung auf den Substitutionsgrad von etwa 1,5-1,8 mequ/g (ca. 70-80% der accessiblen O-Ph-O-Gruppen) bei der Sulfonierung mit Schwefelsäure gemäß EP 574 791 A2 nur bei hohen Temperaturen erreichen.

Aus wirtschaftlichen Überlegungen und wegen technischer Anforderungen werden jedoch zur Verringerung des elektrischen Widerstandes höhere als die mit PEEK oder PEEKK realisierbaren Funktionalgruppenkonzentrationen angestrebt. Es ist daher Aufgabe der vorliegenden Erfindung, Materialien auf Basis von Polyaryletherketonen aufzufinden, welche die wirtschaftlich und technisch geforderten höheren Ionenaustauscherkapazitäten bei gleichzeitig möglichst geringer Quellung in wäßrigen Medien aufweisen, so daß die Anwendung dieser Membranen im Bereich der elektrolytischen Wasserspaltung zur Wasserstoff- und Sauerstoffgewinnung oder in Kombination mit einer Anionenaustauschermembran (bipolaren Membran) zur Gewinnung von Säuren und Laugen aus den korrespondierenden Salzen zu verbesserten Ergebnissen führt.

Überraschenderweise konnte gefunden werden, daß sich auch solche Polyetherketone sulfonieren lassen, die überhaupt keine O-Ph-O-Gruppen aufweisen, wenn sie in einem Gemisch aus konzentrierter Schwefelsäure und Oleum mit einem Gesamtschwefeltrioxidgehalt von mindestens 82 Masse-% sulfoniert werden. Bei der Sulfonierung mit derart hohem Gesamtschwefeltrioxidgehalt können die erforderlichen Sulfonierungsgrade unter extrem milden Temperaturbedingungen (meist nicht mehr als 35° oder 40°C, oft darunter) erreicht werden, was in Hinblick auf die Ausbeute vorteilhaft ist. Aufgrund dieser neueröffneten Möglichkeiten durch das obige Verfahren lassen sich erfindungsgemäß auch sulfonierte Polyetherketone mit einem Verhältnis von Keto- zu Ethergruppen von >1:1 herstellen, die meist (z.B. in der Struktur PEKEKK) keine O-Ph-O-Gruppen besitzen. Diese neuen sulfonierten Polyaryletherketone zeigen bei einem mit den herkömmlichen Polyetherketonen vergleichbaren Sulfonierungsgrad ein verbessertes, d.h. verringertes Quellverhalten, d.h., sie lassen sich bei immer noch günstigem Quellverhalten auf die applikationsrelevanten erwünschten höheren Sulfonierungsgrade sulfonieren. Solche Polyetherketonetherketonketone wie PEKEKK (Struktur 3) und dergleichen können dann als Basismaterial für die Membranen eingesetzt werden.

Es wurde gefunden, daß unabhängig vom Prozentsatz der Ethergruppen mit wachsendem Anteil der Ketogruppen im Makromolekül die Schwefeltrioxidkonzentration in der Schwefelsäure ebenfalls ansteigen muß, um vergleichbare Sulfonsäuregruppenkonzentrationen im Polymeren zu erzielen. Dies war deshalb überraschend, weil bisher nur Etherphenylethergruppen als sulfonierbar galten.

Sulfonierte Polyaryletherketone zeigen also, wie bereits oben erwähnt, bei gleicher Sulfogruppenkonzentration mit steigender Konzentration der Ketogruppen im Verhältnis zu den Ethergruppen eine Abnahme des Quellvermögens bzw. sind bei vergleichbarem Quellvermögen höher sulfoniert. Sulfonierte Polyetherketone der Struktur PEEKK und PEKEKK oder dgl. mit Sulfonsäuregehalten bis etwa 1,9 mequ/g lösen sich in Amidlösungsmitteln, wie Dimethylformamid und Dimethylacetamid, und sie können aus diesen Lösungen nach bekannten Verfahren zu Membranen verarbeitet werden.

Die aus den erfindungsgemäßen Polymeren mit Keto- : Ethergruppen > 1:1 hergestellten Kationenaustauschermembranen zeichnen sich aufgrund der höheren Funktionalgruppenkonzentration der Polymeren, aus denen sie hergestellt werden, durch eine höhere Kationenaustauscherkapazität, geringen elektrischen Widerstand und geringere Quellbarkeit als vergleichbare Produkte aus. So ist eine Membran aus PEKEKK bei einem Sulfonsäuregruppengehalt von 2.0 mequ/g in $H_2O$ zwar quellbar, aber wird noch nicht angelöst, wie es bei einer Membran aus PEEKK der Fall ist. Die aus den erfindungsgemäßen Polymeren nach bekannten Verfahren gefertigten Membranen sind infolge ihrer chemisch strukturell bedingten geringen Quellbarkeit auch bei hohen Funktionalgruppenkonzentrationen mechanisch und thermisch hoch belastbar und unter allen technologisch relevanten Bedingungen einschließlich der bei Prozeßstörungen möglichen Extremalbelastungen einsetzbar.

Im folgenden wird das erfindungsgemäße Verfahren anhand von Ausführungsbeispielen erläutert.

Ausführungsbeispiele

Beispiel 1 (Vergleichsbeispiel)

25 g Polyetheretherketon PEEK werden unter Rühren in 400g 96%iger Schwefelsäure eingebracht. Die Temperatur wird 48h bei 25°C gehalten. In dem von Beginn an tiefrot gefärbten Gemisch geht das Polymere innerhalb von 24h überwiegend in Lösung. Das viskose Reaktionsgemisch wird gegen Ende der Reaktionszeit vollkommen klar. Das Sulfonierungsprodukt wird durch Fällen in verdünnter Natronlauge isoliert, neutral gewaschen und im Vakuum bis zur Gewichtskonstanz getrocknet. Aus einer 10%igen Lösung in Dimethylacetamid wird auf eine Glasplatte eine Schicht von 500μm aufgerakelt, das Lösungsmittel bei 160°C weitestgehend verdampft und die gebildete Membran unter Wasser von der Glasplatte abgelöst und mit Wasser lösungsmittelfrei gewaschen.

Ausbeute: 95%
Sulfonsäuregehalt: 1,25 mequ/g (40% der -O-Ph-O-Strukturen)
Quellung: 18% in Wasser bei 25°C
Permselektivität: 97%
spez. Flächenwiderstand: 1,85 Ohm*cm

Beispiel 2 (Vergleichsbeispiel)

25 g Polyetheretherketon PEEK werden unter Rühren in 400g 96%iger Schwefelsäure eingebracht und 48h bei 30°C umgesetzt. Das sulfonierte PEEK wird durch Fällen in verdünnter Natronlauge isoliert, neutral gewaschen und im Vakuum bis zur Gewichtskonstanz getrocknet. Eine analog Beispiel 1 hergestellte Membran zeigt bei nur geringfügig höherem Sulfonsäuregehalt bereits eine unter applikativen Gesichtspunkten zu hohe Quellbarkeit.

Ausbeute: 95%
Sulfonsäuregehalt: 1,58 mequ/g (53%)

Quellung: 120%
Permselektivität: 90%
spez. Flächenwiderstand: 0,64 Ohm*cm

Beispiel 3 (erfindungsgemäß)

25 g Polyetheretherketonketon PEEKK werden unter Rühren in ein Gemisch aus 300 g 96%iger Schwefelsäure und 160 g 30%igem Oleum eingebracht, und das Sulfonierungsgemisch wird 72h bei 35°C gehalten. Die Aufarbeitung des Reaktionsansatzes, die Isolierung des polymeren Sulfonierungsproduktes sowie die Herstellung der Membran erfolgt analog Beispiel 1.

Ausbeute: 95%
Sulfonsäuregehalt: 1,78 mequ/g (82%)
Quellung: 26%
Permselektivität: 96%
spez. Flächenwiderstand: 0,27 Ohm*cm

Beispiele 4-6 (erfindungsgemäß)

Jeweils 25 g Polyetheretherketonketon PEEKK werden entsprechend Beispiel 2 mit unterschiedlich zusammengesetzten Schwefelsäure/Oleum-Gemischen umgesetzt, und entsprechend Beispiel 1 werden die Sulfonierungsgemische aufgearbeitet und die sulfonierten Polyetheretherketonketone isoliert.

| Bspl. | Schwefelsäure g | Oleum g | Sulfonsäuregruppen mequ/g | Quellung % |
|---|---|---|---|---|
| 4 | 300 | 150 | 1,41 (64%) | 25 |
| 5 | 300 | 157,5 | 1,58 | 30 |
| 6 | 300 | 165 | 1,81 (84%) | 30 |

Beispiel 7 (erfindungsgemäß)

25 g Polyetherketonetherketonketon PEKEKK werden unter Rühren in ein Gemisch aus 270 g 96%iger Schwefelsäure und 200 g 30%igem Oleum eingebracht und 72h bei 30°C gehalten. Nach Aufarbeitung und Isolierung des sulfonierten Polymeren wird entsprechend Beispiel 1 aus dem sulfonierten PEKEKK eine Membran hergestellt.

Ausbeute: 95%
Sulfonsäuregehalt: 1,68 mequ/g
Quellung: 25%
Permselektivität: 97%
spez. Flächenwiderstand: 0,24 Ohm*cm

Beispiele 8-10 (erfindungsgemäß)

Jeweils 25 g Polyetherketonetherketonketon PEKEKK werden in unterschiedlich zusammengesetzten Schwefelsäure/Oleum-Gemischen entsprechend Beispiel 6 sulfoniert und entsprechend Beispiel 1 wird das Reaktionsgemsich aufgearbeitet und die Polymeren isoliert.

| Bspl. | Schwefelsäure g | Oleum g | Sulfonsäuregruppen mequ/g | Quellung % |
|-------|-----------------|---------|---------------------------|------------|
| 8 | 250 | 200 | 1,88 | 27 |
| 9 | 265 | 200 | 1,70 | 28 |
| 10 | 280 | 200 | 1,42 | 24 |

Beispiel 11

1000g Polyetherketonetherketonketon PEKEKK werden in einem 15 l fassenden Glasreaktor unter Rühren in 7 l 96%iger Schwefelsäure und 2 l 65%igem Oleum gelöst und innerhalb von 72h bei 35°C mit dem Reaktionsgemisch zu einem sulfonierten PEKEKK umgesetzt. Die Reaktionslösung wird unter kräftigem Rühren in 200 l Wasser eingetragen. Das ausgefällte Sulfonierungsprodukt wird mit Wasser neutral gewaschen und im Vakuum getrocknet. Die Ausbeute an sulfoniertem PEKEKK beträgt 97% bei einem Sulfonsäuregruppengehalt von 1,81 mequ/g.

**Patentansprüche**

1. Verfahren zum Herstellen von sulfonierten Polyaryletherketonen,
   **dadurch gekennzeichnet,**
   daß man aromatische Polyetherketone in einem Gemisch aus konzentrierter Schwefelsäure und Oleum mit einem Gesamtschwefeltrioxidgehalt von mindestens 82 Masse-% sulfoniert.

2. Verfahren nach Anspruch 1,
   **dadurch gekennzeichnet,**
   daß man die Sulfonierung bei Temperaturen von ≤ 40°C durchführt.

3. Verfahren zum Herstellen von sulfonierten Polyaryletherketonen in Form von Kationenaustauschermembranen,
   **dadurch gekennzeichnet,**
   daß man aromatische Polyetherketone gemäß Anspruch 1 oder 2 sulfoniert und die Sulfonierungsprodukte anschließend in Amidlösungsmittel löst und aus dieser Lösung Kationenaustauschermembranen erzeugt.

4. Verfahren zum Herstellen von sulfonierten Polyaryletherketonen in Form von Kationenaustauschermembranen,
   **dadurch gekennzeichnet,**
   daß man gemäß Anspruch 1 oder 2 hergestellte sulfonierte Polyaryletherketone mit dem Strukturelement PEKEKK und sulfonierte Polyaryletherketone mit dem Strukturelement PEEKK im Verhältnis 10:90 bis 90:10 in Amidlösungsmittel mischt und aus dieser Lösung Kationenaustauschermembranen erzeugt.

5. Verfahren zum Herstellen von sulfonierten Polyaryletherketonen in Form von Kationenaustauschermembranen,
   **dadurch gekennzeichnet,**
   daß man Mischungen von Polyaryletherketonen mit dem Strukturelement PEEKK und Polyaryletherketonen mit dem Strukturelement PEKEKK in einem Gemisch aus konzentrierter Schwefelsäure und Oleum mit einem Gesamtschwefeltrioxidgehalt von mindestens 82 Masse-% gemeinsam sulfoniert, anschließend in Amidlösungsmittel löst und aus dieser Lösung Kationenaustauschermembranen erzeugt.

6. Sulfonierte unvernetzte Polyaryletherketone,
   **gekennzeichnet durch**
   ein Verhältnis von Keto- zu Ethergruppen von >1:1.

7. Sulfonierte Polyaryletherketone nach Anspruch 6,
   **gekennzeichnet durch**
   einen Sulfogruppengehalt von mindestens 1,40 mequ/g.

8. Sulfonierte Polyaryletherketone nach Anspruch 6 oder 7 in Form von Kationenaustauschermembranen.

9. Sulfonierte Polyaryletherketone nach einem der Ansprüche 6 bis 8,
   **dadurch gekennzeichnet,**
   daß sie das Strukturelement Polyetherketonetherketonketon (PEKEKK) aufweisen.

10. Sulfonierte Polyaryletherketone nach Anspruch 9, dadurch gekennzeichnet, daß sie zusätzlich das Strukturelement Polyetheretherketon (PEEK) und/oder das Strukturelement Polyetheretherketonketon (PEEKK) enthalten.

Europäisches
Patentamt

# EUROPÄISCHER RECHERCHENBERICHT

Nummer der Anmeldung

EP 96 11 4096

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X,D | EP-A-0 574 791 (HOECHST AG.)<br>* Beispiele 1,7 *<br>--- | 1-3 | C08G65/48<br>B01D71/52 |
| X | J.POLYMER SCI. : POLYMER CHEM. ED. ,<br>Bd. 23, 1985,<br>Seiten 1231-1241, XP002020703<br>OGAWA T. ET AL: "Polyaromatic<br>ether-ketones "<br>* Abbildung 1; Tabelle 1 *<br>--- | 6-8 | |
| A | EP-A-0 341 473 (AKZO N.V. )<br>* Beispiel 1 *<br>--- | 1-3 | |
| E | WO-A-96 29359 (HOECHST AG)<br>*Whole document*<br>--- | 1-10 | |
| E | WO-A-96 29360 (HOECHST AG )<br>*Whole document*<br>----- | 1-10 | |

RECHERCHIERTE
SACHGEBIETE (Int.Cl.6)

C08G
B01D

Der vorliegende Recherchenbericht wurde für alle Patentansprüche erstellt

| Recherchenort | Abschlußdatum der Recherche | Prüfer |
|---|---|---|
| DEN HAAG | 9.Dezember 1996 | O'Sullivan, T |